Europäisches Patentamt

European Patent Office

Office européen des brevets

(19)

(11) **EP 1 344 233 B1**

## (12) FASCICULE DE BREVET EUROPEEN

(45) Date de publication et mention
de la délivrance du brevet:
**04.08.2004 Bulletin 2004/32**

(21) Numéro de dépôt: **01996872.6**

(22) Date de dépôt: **13.11.2001**

(51) Int Cl.$^7$: **H01G 7/06**

(86) Numéro de dépôt international:
**PCT/FR2001/003546**

(87) Numéro de publication internationale:
**WO 2002/041341 (23.05.2002 Gazette 2002/21)**

(54) **CAPACITE VARIABLE COMMANDABLE EN TENSION PAR UTILISATION DU PHENOMENE DE "BLOCAGE DE COULOMB"**

DURCH VERWENDUNG DES COULOMBBLOCKADE-PHÄNOMENS SPANNUNGSSTEUERBARE VARIABLE KAPAZITÄT

VARIABLE CAPACITANCE VOLTAGE-CONTROLLABLE BY USE OF COULOMB BARRIER PHENOMENON

(84) Etats contractants désignés:
**DE GB NL SE**

(30) Priorité: **17.11.2000 FR 0014884**

(43) Date de publication de la demande:
**17.09.2003 Bulletin 2003/38**

(73) Titulaire: **Thales**
**75008 Paris (FR)**

(72) Inventeurs:
• **FRIEDERICH, Alain,**
**THALES Intellectual Property**
**F-94117 Arcueil Cedex (FR)**
• **NGUYEN VAN DAU, Frédéric,**
**THALES Intell. Property**
**F-94117 Arcueil (FR)**
• **FERT, Albert, THALES Intellectual Property**
**F-94117 Arcueil Cedex (FR)**

• **JAFFRES, H., THALES Intellectual Property**
**F-94117 Arcueil Cededex (FR)**

(74) Mandataire: **Esselin, Sophie**
**THALES Intellectual Property,**
**31-33 avenue Aristide Briand**
**94117 Arcueil Cedex (FR)**

(56) Documents cités:
**DE-A- 3 012 117**

• **HIRVI K P ET AL: "ARRAYS OF NORMAL METAL TUNNEL JUNCTIONS IN WEAK COULOMB BLOCKADE REGIME" APPLIED PHYSICS LETTERS, AMERICAN INSTITUTE OF PHYSICS. NEW YORK, US, vol. 67, no. 14, 2 octobre 1995 (1995-10-02), pages 2096-2098, XP002040335 ISSN: 0003-6951**

EP 1 344 233 B1

**Description**

La présente invention concerne un dispositif capacitif, tel qu'une capacité variable, commandé en utilisant le phénomène de « blocage de Coulomb » .

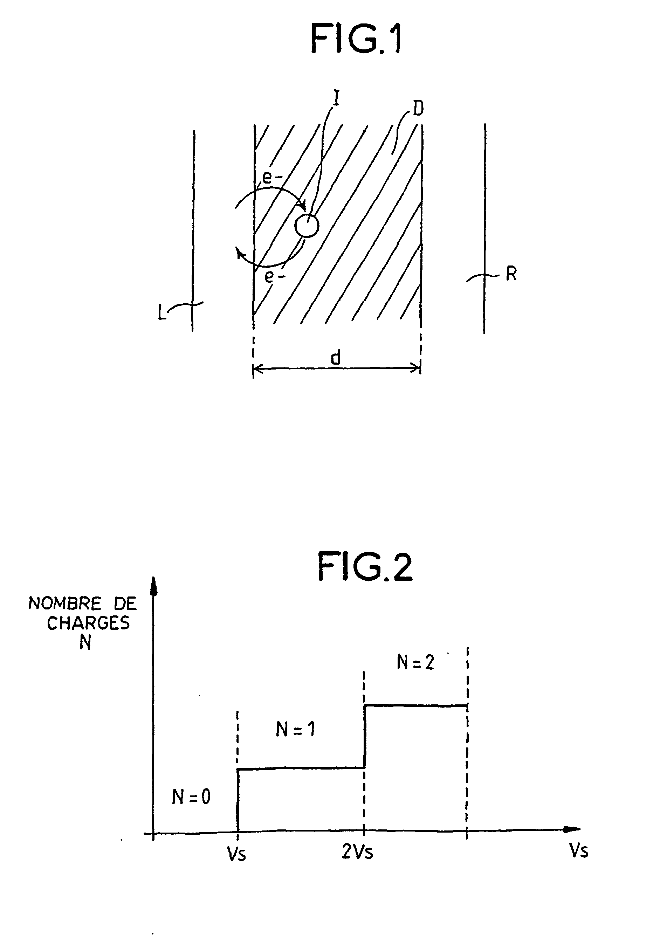

Le phénomène de blocage de Coulomb se produit dans des agrégats conducteurs ou semi-conducteurs sur lesquels peuvent être accumulées des charges électriques, à la fois isolées électriquement de leur environnement et faiblement couplées à celui-ci par effet tunnel. Ce phénomène caractérise notamment certaines jonctions métal-isolant-métal constituées de deux armatures métalliques L, R, séparées par une matrice diélectrique D dans laquelle sont dispersées de petites particules métalliques, ou agrégats, de taille réduite, typiquement de l'ordre de quelques nanomètres. La figure 1 schématise une coupe d'une telle structure. Le blocage de Coulomb se manifeste en premier lieu par une conductance nulle entre les deux armatures L, R, ou électrodes, au-dessous d'un seuil de tension Vs. Elle traduit simplement l'énergie électrostatique à vaincre pour faire transiter un électron par un agrégat central et en conséquence pour faire circuler un courant d'une armature à une autre.

La courbe de la figure 2, indique, en fonction de la tension de seuil Vs appliquée au niveau des armatures de la capacité, la charge N prise par un agrégat pour une tension donnée. Pour un seuil d'énergie donné, la charge de l'agrégat est incrémentée d'une unité de Ne à (N+1 )e, ce qui se manifeste sur la caractéristique I(V) de la jonction tunnel par une succession de paliers et de marches, ces dernières correspondant à des tensions régulièrement espacées en unités de Vs.

Ces effets de blocage sont très bien décrits à basse température mais doivent toutefois être pondérés par l'énergie d'activation thermique (kT=25 meV à 300 K) pour des dispositifs fonctionnant à température ambiante.

L'art antérieur divulgue des capacités à commande variable de type semi-conducteur, dont un inconvénient est de présenter des résistances de fuite relativement importantes. Ces dernières peuvent être néfastes au bon fonctionnement de la capacité, le facteur de qualité se trouve par exemple dégradé.

L'objet de l'invention concerne un dispositif capacitif, telle qu'une capacité variable commandée en tension, par exemple une tension continue.

L'idée est de pouvoir contrôler, à l'aide d'une différence de potentiel, la quantité de charges stockées sur des agrégats ainsi que sur chacune des armatures de la capacité. La capacité pouvant être assimilée au rapport entre la quantité de charges stockée sur les armatures et la tension pourra être modulée en conséquence.

L'objet de l'invention concerne un dispositif capacitif variable tel que défini dans les revendications, commandable en tension Vc comportant au moins une première armature L et une deuxième armature R. Il est caractérisé en ce que lesdites armatures sont séparées par une couche isolante incluant une pluralité d'agrégats conducteurs séparés les uns des autres.

Selon un mode de réalisation les armatures L et R sont par exemple séparées par une distance d et la distance $d_L$ d'un agrégat à une première armature, la plus proche par exemple est telle que $1 < (d_L/d_R) < 10$ avec $d = d_L + d_R$, $d_R$ étant la distance d'un agrégat à la deuxième armature.

Les agrégats peuvent être répartis dans un plan bidimensionnel, ou dans plusieurs plans bidimensionnels espacés périodiquement et la distance $d_L$ d'un agrégat du plan le plus proche à une armature est telle que $1 < (d_L/d_R) < 10$ avec $d = d_L + d_R$.

L'isolant est par exemple formé d'aù moins deux diélectriques de nature différente et les agrégats sont distribués au niveau de l'interface séparant deux diélectriques adjacents.

L'isolant constitué de deux matériaux $D_R$ et $D_L$, chacun ayant une constante diélectrique $\varepsilon_R$ et $\varepsilon_L$, la valeur du rapport $\varepsilon_R/\varepsilon_L$ est par exemple choisie par rapport à la tension de seuil, cette dernière a de préférence une valeur de l'ordre de quelques centaines de millivolt ou de l'ordre du volt.

L'isolant peut être de l'alumine ou un diélectrique choisi parmi la liste suivante : $SiO_2$, $TiO_2$, $S_{13}N_4$, $Al_2O_3$, AIN, BN, MgO, $Ta_2O_5$, pris seul ou en combinaison.

L'invention concerne aussi un circuit résonant comportant au moins une capacité comportant au moins deux armatures (L) et (R ) séparées par un diélectrique (D) comprenant un nombre d'agrégats susceptibles de se charger ou de se décharger sous l'effet d'une tension de commande (Vc) délivrée par un générateur.

La tension de commande à appliquer est par exemple une tension continue.

Selon un mode de réalisation, la valeur de la tension de commande est choisie pour obtenir une variation de capacité relative égale à:

$$\frac{\Delta C}{C^0_{L,R}} = \frac{2}{(2N+1)} \frac{\varepsilon_R}{\varepsilon_L} \frac{d_L}{d_R} \rho(s_c) N_{IS} s_c^2$$

avec

$$s_c = \frac{(2N + 1)\, ed_R}{2\varepsilon_R V_c}$$

où

$N_i$ est la quantité de charge moyenne portée par les agrégats,

$N_{IS}$ : la densité d'agrégats par unité de surface,

$S_c$ : la surface moyenne des agrégats,

$\rho$ : la distribution normalisée de la taille des agrégats.

L'invention présente notamment comme avantage d'offrir un dispositif capacitif dont la capacité peut être commandée en tension, donc adaptée à une plage de fonctionnement souhaitée.

D'autres caractéristiques et avantages apparaîtront à la lecture de la description détaillée d'un mode de réalisation d'une capacité pris à titre d'exemple non limitatif et illustré par les dessins annexés où :

- la figure 1 est une coupe schématique d'une capacité selon l'invention,
- la figure 2 schématise les différentes charges prises par un agrégat en fonction de la tension de seuil,
- la figure 3 est une courbe indiquant la distribution des agrégats « activés » ou participant en fonction de la tension de seuil,
- la figure 4 est un exemple de schéma d'un circuit résonnant utilisant une capacité selon l'invention,
- les figures 5 et 6 schématisent en coupe, deux variantes de réalisation d'une structure de capacité comportant des agrégats distribués selon un ou plusieurs plans bidimensionnels et leur schéma électrique équivalent.

Le dispositif capacitif de la figure 1 comporte une structure de capacité selon l'invention. La structure de cette capacité comprend une première armature métallique L, une deuxième armature métallique R séparées par une couche d'isolant D ou diélectrique d'épaisseur d.

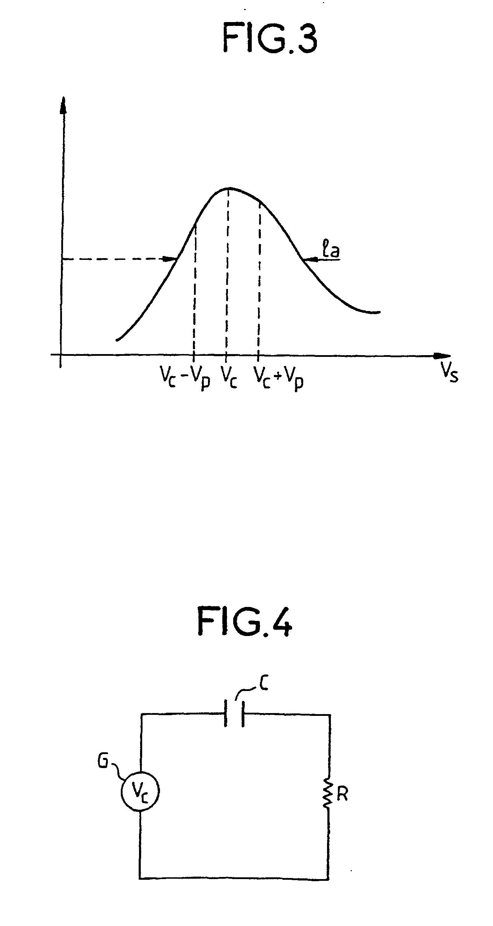

Le diélectrique D inclus plusieurs agrégats 1 conducteurs isolés les uns des autres. Ces agrégats sont par exemple en métal ou en un matériau semi-conducteur et constituent des sites sur lesquels peuvent être accumulées des charges de porteurs par exemple des électrons. La charge d'un agrégat est fonction de son potentiel électrostatique Vs. Cette charge est susceptible de varier par application d'une tension de commande (figure 3).

La taille des agrégats est choisie suffisamment petite, de l'ordre de quelques nm (nanomètres), pour que le terme d'activation thermique reste bien inférieur à l'énergie de seuil, permettant l'observation du blocage de Coulomb à température ambiante et éventuellement au-delà.

Les agrégats distribués dans le diélectrique présentent une certaine diversité dans leur taille. En effet, l'utilisation d'agrégats monodisperses entraîne une absence de modulation de capacité. La dispersion en taille des agrégats est caractérisée par une largeur donnée la, mesurée à mi-hauteur par exemple de la courbe de distribution.

La figure 3 représente la courbe normalisée de distribution des agrégats en fonction de la valeur de la tension de seuil Vs. Autour de cette valeur Vs, dans une plage de tension correspondant à [-Vp+Vc, Vc+Vp], les agrégats se chargent et se déchargent au cours d'une période d'un signal sinusoïdal d'amplitude Vp, le signal sinusoïdal étant un signal extérieur auquel est « soumis » la capacité.

Les agrégats sont par exemple uniformément répartis dans le diélectrique ayant une structure à trois dimensions.

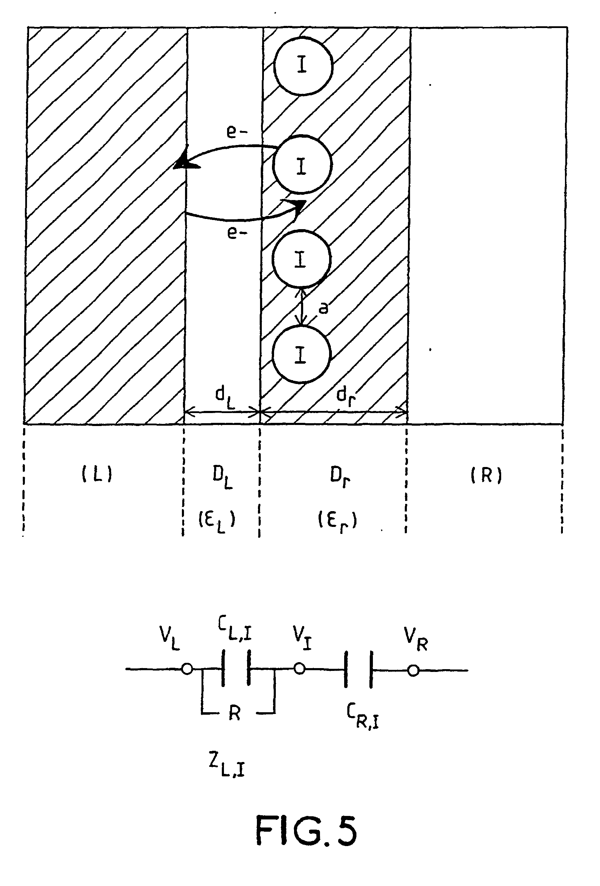

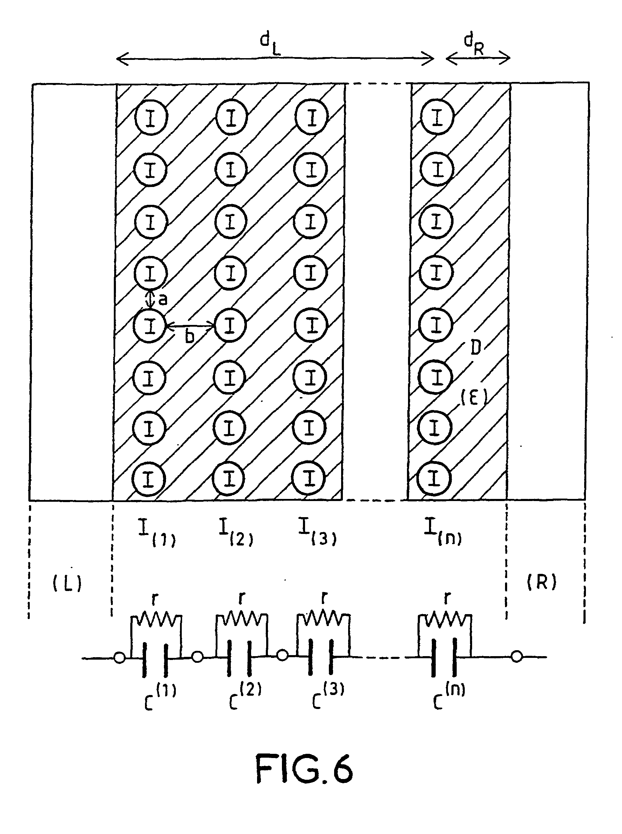

Sans sortir du cadre de l'invention, les agrégats peuvent aussi être distribués dans des plans bidimensionnels selon des schémas décrits aux figures 5 et 6.

La figure 4 décrit un circuit de résonance comportant par exemple une résistance R, une capacité C selon l'invention reliée à un générateur G adapté à délivrer une tension continue Vc. Cette tension Vc de commande se superpose à la modulation sinusoïdale Vp. La tension Vc détermine notamment le nombre d'agrégats participant à la variation de la capacité C.

Sans sortir du cadre de l'invention, la capacité présentant l'une des caractéristiques de l'invention peut être intégrée dans un circuit bouchon comportant une self en parallèle de la capacité, ou encore d'autres circuits résonants plus complexes et connus de l'Homme du métier.

La description qui suit permet de préciser la variation ou la modulation de la capacité en fonction de la tension de commande appliquée à ses bornes. Elle est donnée pour une structure de capacité décrite à la figure 5 à titre illustratif et nullement limitatif.

La figure 5 schématise une capacité où le diélectrique D est constitué de deux matériaux de constantes diélectriques respectives : $\varepsilon_L$, $\varepsilon_R$. Les agrégats, séparés d'une distance « a » par exemple, sont distribués selon un plan bidimensionnel situé par exemple à la frontière des deux diélectriques et à une distance $d_L$ de l'armature (L) et $d_R$ de l'armature (R). Ces agrégats sont en influence électrostatique avec ces deux armatures. Dans ce cas, et en considérant le transfert d'électrons entre l'armature de gauche (L) et un agrégat 1, la tension de seuil Vs correspondant à l'énergie à fournir pour amener une charge supplémentaire jusqu'à la surface d'un agrégat est donnée par la relation

$$V_s = V_{LII} + V_{IIR} = \frac{2N+1}{2} \frac{C_{RII} + C_{LII}}{C_{RII}} \frac{e}{C_{RII} + C_{LII}} \qquad [1]$$

avec
$V_{L/I}$ = la tension entre l'agrégat et l'armature de gauche, $V_{I/R}$ la tension entre l'agrégat et l'armature de droite,
$C_{R/I}$ et $C_{L/I}$ les capacités mutuelles entre les agrégats et le plan d'agrégat vu dans son ensemble, et
$C_{R/I}$ et $C_{L/I}$ les capacités d'un agrégat unique avec une des armatures respectivement R et L.

**Détermination de la capacité totale entre les deux armatures en présence de charges stockées sur des agrégats**

La quantité de charge stockée dans chaque armature L et R, lorsqu'il existe une charge $Q_I$ stockée sur un agrégat central et provenant par exemple de l'armature L, est donnée par la relation liant $Q_L$, $Q_R$ et $Q_I$

$$Q_R = \frac{C_{L,I} C_{R,I}}{C_{L,I} + C_{R,I}} V - Q_I \frac{C_{R,I}}{C_{L,I} + C_{R,I}} \qquad [2]$$

avec V la tension appliquée aux bornes des deux armatures,
**[0031]** Dans l'hypothèse où seul s'opère un transfert d'électron entre l'armature de gauche et les agrégats et en tenant compte des effets du blocage de Coulomb, la capacité s'écrit alors

$$C = \frac{C_{L,I} C_{R,I}}{C_{L,I} + C_{R,I}} - \frac{C_{R,I}}{C_{L,I} + C_{R,I}} \frac{\delta Q_I}{\delta V} \qquad [3]$$

soit

$$C = \frac{C_{L,I} C_{R,I}}{C_{L,I} + C_{R,I}} \left( 1 - \frac{e}{C_{L,I}} \frac{\delta N_I}{\delta V} \right) \qquad \textbf{[4]}$$

où $N_I$ est le nombre d'agrégats chargés
Selon la relation [4], la variation relative de la capacité est égale à

$$\frac{\Delta C}{C^0_{L,R}} = \frac{|e|}{C_{L,I}} \frac{\delta N_I}{\delta V} (V_c) \qquad (5)$$

avec $C^0_{L,R}$ la valeur de la capacité entre les armatures en absence d'agrégats dans le diélectrique.
La variation de la capacité est donc fonction du nombre d'agrégats chargés, susceptible de varier en appliquant une tension continue supérieure à la tension de seuil.

**Capacité modulable en tension**

Les capacités mutuelles entre le plan d'agrégats vu dans son ensemble et les armatures (L) et ( R) s'écrivent respectivement et en première approximation:

$$C_{LII} = \varepsilon_L \frac{S}{d_L} \text{ et } C_{RII} = \varepsilon_R \frac{S}{d_R}$$

avec S la surface de l'armature, on considère que les deux armatures L et R ont une surface identique.
Les capacités mutuelles entre les armatures et une particule donnée $C_{I/L}$ et $C_{R/I}$ sont obtenues en remplaçant la surface totale S par la surface effective de la particule en regard avec l'armature considérée.

En considérant la relation [1], la tension de seuil $v_s$ s'exprime par exemple en fonction de la surface de la particule s

$$V_s = \frac{2N + 1}{2} \frac{e}{\varepsilon_R} \frac{d_R}{s} \qquad [6]$$

donc, à une tension de commande Vc donnée, correspond une surface donnée d'agrégats susceptibles de voir leur charge évoluer :

$$s_c = \frac{2N + 1}{2} \frac{e}{\varepsilon_R} \frac{d_R}{V_c} \qquad [7]$$

avec $d_R$ la distance de l'agrégat à l'armature R disposée à droite sur le schéma, N la charge initiale pour un agrégat et une tension donnée Vc.

Dans l'intervalle de tension [Vc-Vp ; Vc+Vp], les jonctions qui se chargent et se déchargent successivement durant une période du signal de modulation Vp sont celles pour lesquelles la surface $s_c$ de la particule est comprise entre

$$s_c = \frac{(2N + 1)ed_R}{2\varepsilon_R V_c} \text{ et } s_c = \frac{(2N + 1)ed_R}{2\varepsilon_R(Vc + Vp)} \qquad [8]$$

ce qui correspond à une plage de surface d'agrégats $\Delta S_c$ égale à :

$$\Delta s_c = \frac{(2N + 1)ed_R v_p}{2\varepsilon_R V_c^2} \qquad [9]$$

Si p(s) est la distribution normalisée d'agrégats de surface s, le nombre de particules dont la surface est comprise entre s et s+$\Delta$s est égal à :

$$N_{IS} \, S\rho(s) \, \Delta s \qquad [10]$$

avec $N_{IS}$ le nombre d'agrégats par unité de surface et S la surface totale de la capacité.

Le nombre d'agrégats qui se charge est alors égal à :

$$N_I = \frac{2N_{IS}s\rho(s)v_p\varepsilon_R S_c^2}{(2N + 1)ed_R} \qquad [11]$$

Et la variation relative de la capacité s'exprime selon la relation suivante :

$$\frac{\Delta C}{C_{L,R}^0} = \frac{2}{(2N + 1)} \frac{\varepsilon_R}{\varepsilon_L} \frac{d_L}{d_R} \, \rho(s_c)N_{IS}s_c^2 \qquad [12]$$

avec

$$s_c = \frac{(2N + 1)ed_R}{2\varepsilon_R V_c} \qquad [13]$$

Les relations [12] et [13] expriment la variation de la capacité en fonction de la tension de commande Vc, de la densité des agrégats ainsi que de leur dispersion en taille. La modulation de la capacité est fonction du taux de couverture apparent, $N_{IS}*s_c$ et de la valeur de distribution $\rho(s)$ prise pour $s=s_c$.

**Paramètres caractéristiques de la capacité**

Les trois caractéristiques principales des capacités variables sont leur amplitude de modulation, leur échelle de tension de commande correspondant à la plage de tension préférentielle (dans laquelle il est souhaitable de travailler), et leur résistance de fuite.

De manière à optimiser ces différentes caractéristiques, il est possible de choisir certains paramètres notamment la nature et la géométrie du diélectrique D, la largeur de dispersion en taille des agrégats.

Epaisseur du diélectrique disposé entre les deux armatures

La distance $d_R$ séparant un agrégat de l'armature droite de la capacité, est choisie aussi grande que possible pour éviter ou minimiser les courants de fuite par effet tunnel.

De préférence la valeur du rapport $d_R/d_L$ appartient à l'intervalle [1, 10]. Cette plage de valeurs permet notamment de limiter le courant de fuite à travers la capacité et donc d'améliorer le facteur de qualité et la bande passante d'un circuit électronique utilisant des capacités.

Constantes diélectriques

Pour un diélectrique formé de plusieurs matériaux diélectriques présentant des valeurs de constante diélectriques différentes, l'amplitude de la modulation d'une capacité varie linéairement comme le rapport des valeurs des constantes diélectriques.

Par exemple, la réalisation d'une barrière formée de deux matériaux dont le rapport des constantes diélectriques est convenablement choisi, par exemple $\varepsilon_R/\varepsilon_L$ supérieur à l'unité, permet d'augmenter artificiellement le potentiel électrostatique de agrégats pour une tension de commande fixée. Cette propriété se manifeste par une augmentation conséquente de la modulation observée en rapport des constantes diélectriques. Parallèlement, cet effet s'accompagne d'une réduction de la tension de modulation ainsi que de leur gamme de variation.

Dans le cas de l'alumine, ayant une valeur de constante diélectrique égale à 8, et pour des tailles d'agrégats de l'ordre du nanomètre et une distance $d_L$ voisine du nm, les valeurs de tension de seuil obtenues sont de l'ordre de quelques centaines de mV ou du volt.

Choix du matériau du diélectrique

Le diélectrique formé d'un ou plusieurs matériaux isolants est par exemple choisi dans la liste suivante : $SiO_2$, $TiO_2$, $Si_3N_4$, $Al_2O_3$, AIN, BN, MgO, $Ta_2O_5$, pris seul ou en combinaison.

Largeur de la dispersion en taille des agrégats

Les relations [12] et [8] montrent que l'amplitude de la modulation de la capacité est inversement proportionnelle à la largeur de la dispersion, alors que la gamme de tension sur laquelle s'opère la modulation en est une fonction croissante. Généralement, la largeur de la distribution de taille appropriée est choisie afin de maximiser l'amplitude de la modulation en conservant une gamme de tension de commande accessible.

Dans le cas où la dispersion en taille des agrégats n'est pas très large, la modulation de la capacité observée est décrite par une fonction ayant une forme proche de la distribution.

Le fait de réduire l'épaisseur de barrière $d_L$ ou d'utiliser un isolant (L) présentant une faible hauteur de barrière permettra notamment de ne pas limiter la réponse en fréquence de la capacité variable, ce dernier étant déterminé par le temps de transit d'un électron de l'armature de gauche vers les agrégats.

La figure 6 schématise une coupe d'une capacité comportant des agrégats $I_{(i)}$ distribués selon plusieurs plans répartis de manière équidistante (distance b) et son schéma électrique associé, et le circuit équivalent.

Une telle structure peut être utilisée pour augmenter l'effet de modulation en proportion du nombre d'agrégats présents dans le diélectrique. Toutefois, cet effet doit être pondéré par la baisse de tension s'opérant entre deux plans successifs d'agrégats. Cette propriété est mise à profit par exemple pour augmenter la plage de tension de commande au détriment d'une augmentation significative de la modulation.

Plus généralement, un choix judicieux des distances entre plans, sur les constantes diélectriques et sur la densité d'agrégats permet d'augmenter soit l'amplitude de la modulation, soit l'échelle de tension sur laquelle s'opère cette variation.

**Revendications**

1. Dispositif capacitif variable commandable en tension Vc comportant au moins une première armature (L) et une deuxième armature ( R) **caractérisé en ce que** lesdites armatures sont séparées par une couche isolante (D) incluant une pluralité d'agrégats conducteurs séparés les uns des autres.

2. Dispositif capacitif selon la revendication 1 **caractérisé en ce que** les armatures (L) et (R ) sont séparées par une distance d et **en ce que** la distance $d_L$ d'un agrégat à une armature la plus proche est telle que $1 < d_R/d_L < 10$ avec $d = d_L + d_R$.

3. Dispositif capacitif selon la revendication 1 **caractérisé en ce que** les agrégats sont répartis dans un plan bidimensionnel.

4. Dispositif capacitif selon la revendication 1 **caractérisé en ce que** les agrégats sont répartis dans plusieurs plans bidimensionnels espacés périodiquement et **en ce que** la distance $d_L$ d'un agrégat du plan le plus proche à une première armature (L) est telle que $1 < d_R/d_L < 10$ avec $d = d_L + d_R$, où $d_R$ est la distance d'un agrégat à la deuxième armature.

5. Dispositif capacitif selon l'une des revendications précédentes **caractérisée en ce que** l'isolant est formé d'au moins deux diélectriques de nature différente et **en ce que** les agrégats sont distribués au niveau de l'interface séparant deux diélectriques adjacents.

6. Dispositif capacitif selon l'une des revendications précédentes **caractérisé en ce que** l'isolant est constitué de deux matériaux $D_R$ et $D_L$, ayant chacun une constante diélectrique $\varepsilon_R$ et $\varepsilon_L$, la valeur du rapport $\varepsilon_R/\varepsilon_L$ étant choisie par rapport à la tension de seuil, cette dernière a de préférence une valeur de l'ordre de quelques centaines de millivolt ou de l'ordre du volt.

7. Dispositif capacitif selon l'une des revendications précédentes **caractérisé en ce que** l'isolant est de l'alumine ou un diélectrique choisi parmi la liste suivante : $SiO_2$, $TiO_2$, $Si_3N_4$, $Al_2O_3$, AINBN, MgO, $Ta_2O_5$, pris seul ou en combinaison.

8. Circuit résonnant comportant au moins une capacité comportant au moins deux armatures (L) et (R ) séparées par un diélectrique (D) comprenant un nombre d'agrégats susceptibles de se charger ou de se décharger sous l'effet d'une tension de commande (Vc) délivrée par un dispositif adapté (G).

9. Circuit selon la revendication 8 **caractérisé en ce que** la tension de commande à appliquer est une tension continue.

10. Circuit selon l'une des revendications 8 et 9 **caractérisé en ce que** la tension de commande est choisie pour obtenir une variation de capacité relative

$$\frac{\Delta C}{C^0}_{L,R} = \frac{2}{(2N + 1)} \; \frac{\varepsilon_R}{\varepsilon_L} \; \frac{d_L}{d_R} \; \rho(s_c) N_{IS} s_c^{\;2}$$

avec

$$s_c = \frac{(2N + 1)e d_R}{2\varepsilon_R V_c}$$

où N est la quantité de charge moyenne portée par les agrégats, $N_{IS}$ la densité d'agrégats par unité de surface, $S_c$ la surface moyenne des agrégats et p la distribution normalisée de la taille des agrégats.

**Patentansprüche**

1. Mit einer Spannung Vc steuerbare, variable, kapazitive Vorrichtung, die mindestens einen ersten Belag (L) und einen zweiten Belag (R) aufweist, **dadurch gekennzeichnet, dass** die Beläge von einer Isolierschicht (D) getrennt werden, die mehrere leitende Aggregate enthält, die voneinander getrennt sind.

2. Kapazitive Vorrichtung nach Anpruch 1, **dadurch gekennzeichnet, dass** die Beläge (L) und (R) um einen Abstand d voneinander getrennt sind, und dass der Abstand $d_L$ zwischen einem Aggregat und einem nächstliegenden Belag derart ist, dass gilt $1 < (d_L/d_R) < 10$ mit $d = d_L + d_R$.

3. Kapazitive Vorrichtung nach Anpruch 1, **dadurch gekennzeichnet, dass** die Aggregate in einer zweidimensionalen Ebene verteilt sind.

4. Kapazitive Vorrichtung nach Anpruch 1, **dadurch gekennzeichnet, dass** die Aggregate auf mehrere periodisch beabstandete, zweidimensionale Ebenen verteilt sind, und dass der Abstand $d_L$ zwischen einem Aggregat der nächstliegenden Ebene und einem ersten Belag (L) derart ist, dass gilt $1 < (d_L/d_R) < 10$, mit $d = d_L + d_R$, wobei $d_R$ der Abstand zwischen einem Aggregat und dem zweiten Belag ist.

5. Kapazitive Vorrichtung nach einem der vorhergehenden Anprüche, **dadurch gekennzeichnet, dass** die Isolierung aus mindestens zwei Dielektrika unterschiedlicher Art besteht, und dass die Aggregate in Höhe der zwei benachbarte Dielektrika trennenden Grenzfläche verteilt sind.

6. Kapazitive Vorrichtung nach einem der vorhergehenden Anprüche, **dadurch gekennzeichnet, dass** die Isolierung aus zwei Materialien $D_R$ und $D_L$ besteht, die jeweils eine Dielektrizitätskonstante $\varepsilon_R$ bzw. $\varepsilon_L$ aufweisen, wobei der Wert des Verhältnisses $\varepsilon_R/\varepsilon_L$ in Bezug auf die Schwellenspannung gewählt wird, wobei diese Schwellenspannung vorzugsweise einen Wert in der Größenordnung von einigen hundert Millivolt oder in der Größenordnung von 1 Volt hat.

7. Kapazitive Vorrichtung nach einem der vorhergehenden Anprüche, **dadurch gekennzeichnet, dass** die Isolierung Aluminiumoxid oder ein Dielektrikum ist, das aus der folgenden Liste ausgewählt wird: $SiO_2$, $TiO_2$, $Si_3N_4$, $Al_2O_3$, AlNBN, MgO, $Ta_2O_5$, einzeln oder in Kombination.

8. Schwingkreis, der mindestens einen Kondensator enthält, der mindestens zwei Beläge (L) und (R) aufweist, die von einem Dielektrikum (D) getrennt werden, das eine Anzahl von Aggregaten aufweist, die sich unter der Wirkung einer Steuerspannung (Vc), die von einer geeigneten Vorrichtung (G) geliefert wird, aufladen oder entladen können.

9. Kreis nach Anspruch 8, **dadurch gekennzeichnet, dass** die anzulegende Steuerspannung eine Gleichspannung ist.

10. Kreis nach einem der Ansprüche 8 und 9, **dadurch gekennzeichnet, dass** die Steuerspannung so gewählt wird, dass eine relative Kapazitätsänderung

$$\frac{\Delta C}{C^0_{L,R}} = \frac{2\,\varepsilon_R d_L}{(2N+1)\varepsilon_L\,d_R}\,\rho(s_c)N_{IS}S_c^{\,2}$$

erhalten wird, mit

$$S_c = \frac{(2N+1)ed_R}{2\varepsilon_R V_c}$$

wobei N die mittlere Ladungsmenge, die von den Aggregaten getragen wird, $N_{IS}$ die Dichte der Aggregate pro Oberflächeneinheit, $S_c$ die mittlere Oberfläche der Aggregate und $\rho$ die standardisierte Verteilung der Größe der Aggregate ist.

**Claims**

1. Variable-capacitance device controllable by a voltage $V_c$ comprising at least a first electrode (L) and a second electrode (R), **characterized in that** the said electrodes are separated by an insulating layer (D) that includes a plurality of conducting clusters separated from one another.

2. Capacitance device according to Claim 1, **characterized in that** the electrodes (L) and (R) are separated by a distance d and **in that** the distance $d_L$ of a cluster to a nearest electrode is such that $1 < (d_L/d_R) < 10$ with $d = d_L + d_R$.

3. Capacitance device according to Claim 1, **characterized in that** the clusters are distributed within a two-dimensional plane.

4. Capacitance device according to Claim 1, **characterized in that** the clusters are distributed within several two-dimensional planes spaced out in a periodic fashion and **in that** the distance $d_L$ of a cluster in the nearest plane to a first electrode (L) is such that $1 < (d_L/d_R) < 10$ with $d = d_L + d_R$, where $d_R$ is the distance from a cluster to the second electrode.

5. Capacitance device according to one of the previous claims, **characterized in that** the insulator is formed from at least two different dielectrics and **in that** the clusters are distributed close to the interface separating two adjacent dielectrics.

6. Capacitance device according to one of the previous claims, **characterized in that** the insulator is composed of two materials $D_R$ and $D_L$, having respective dielectric constants $\varepsilon_R$ and $\varepsilon_L$, the value of the ratio $\varepsilon_R/\varepsilon_L$ being chosen with respect to the threshold voltage, where the latter preferably has a value of the order of a few hundred millivolts or of the order of a volt.

7. Capacitance device according to one of the previous claims, **characterized in that** the insulator consists of alumina or of a dielectric chosen from the following list: $SiO_2$, $TiO_2$, $Si_3N_4$, $Al_2O_3$, AlNBN, MgO, $Ta_2O_5$, taken alone or in combination.

8. Resonant circuit comprising at least one capacitor that comprises at least two electrodes (L) and (R) separated by a dielectric (D) comprising a number of clusters capable of being charged or discharged by a control voltage ($V_c$) delivered by a suitable device (G).

9. Circuit according to Claim 8, **characterized in that** the control voltage to be applied is a DC voltage.

10. Circuit according to either of Claims 8 and 9, **characterized in that** the control voltage is chosen so as to obtain a relative variation in capacitance

$$\frac{\Delta C}{C^0_{L,R}} = \frac{2\,\varepsilon_R d_L}{(2N + 1)\,\varepsilon_L d_R}\,\rho(s_c)N_{IS}\,s_c^{\,2}$$

with

$$s_c = \frac{(2N+1)ed_R}{2\varepsilon_R V_c}$$

where N is the mean amount of charge carried by the clusters, $N_{IS}$ is the density of clusters per unit area, $s_c$ is the mean surface area of the clusters and $\rho$ is the normalized size distribution of the clusters.

# FIG.1

# FIG.2

# FIG.3

# FIG.4

FIG.5

FIG.6